# EUROPEAN PATENT SPECIFICATION

(11) **EP 2 930 881 B1**
(45) Date of publication and mention of the grant of the patent: **22.08.2018**
(21) Application number: 14164363.5
(22) Date of filing: 11.04.2014
(51) Int. Cl.: H04L 12/18, H04L 12/46

(54) **Method and system for transmitting a protocol data unit via a telecommunications network, program and computer program product**
Verfahren und System zur Übertragung einer Protokolldateneinheit über ein Telekommunikationsnetzwerk, Programm und Computerprogrammprodukt
Procédé et système permettant de transmettre une unité de données de protocole par l'intermédiaire d'un réseau de télécommunications, programme et produit de programme informatique

(43) Date of publication of application: 14.10.2015
(73) Proprietor: Deutsche Telekom AG, 53113 Bonn (DE)
(72) Inventor: Schatzmayr, Rainer, 53229 Bonn (DE)
(74) Representative: Schwöbel, Thilo K.

(56) References cited:
- WO-A1-2013/162608
- US-A1- 2004 037 279
- US-B1- 7 509 491

## Description

### BACKGROUND

The present invention relates to a method for transmitting a protocol data unit via a telecommunications network.

The present invention further relates to a system for transmitting a protocol data unit via a telecommunications network.

Cloud services are typically provided using virtual local area networks (virtual LAN or VLAN) for the connection of virtual machines (VMs), wherein the virtual LANs are created, for example, on Open Systems Interconnection (OSI) layer-2 switches. These switches may be either physical devices or virtual instances (e.g. of a software running on a server). The current technology limits the number of virtual LANs to approximately 4096 X 4096 = 16777216 VLANs.

When a number of virtual machines associated with the same user or application of a virtual machine are distributed over remotely located data centers, Virtual Private Networks (VPNs) may be created to direct the network traffic associated with the number of virtual machines via the VPNs. However, the use of VPNs results in rather complex management efforts with respect to the management of local switches (virtual of physical) of the data centers and/or the long distance (cross data center) VPNs, which are usually implemented in layer 3 routers.

Documents US 2004/037279 A1, US 7 509 491 B1 and WO 2013/162608 A1 represent prior art relevant with regard to what is disclosed herewith.

### SUMMARY

An object of the present invention is to provide a method and a system for transmitting a protocol data unit via a telecommunications network such that computing machines - in particular computing machines associated with remotely located cloud data centers - are interconnect with new concepts that do not have the limitations of the current technologies.

The object of the present invention is achieved by a method for transmitting a protocol data unit via a telecommunications network, wherein a first multiplexing element is connected to the telecommunications network, wherein a second multiplexing element is connected to the telecommunications network, wherein a first computing machine is connected to the first multiplexing element, wherein a second computing machine and a further second computing machine are connected to the second multiplexing element, the method comprising the steps of:
-- transmitting the protocol data unit from the first computing machine to the first multiplexing element,
-- encapsulating, by the first multiplexing element, the protocol data unit in an Internet Protocol (IP) data packet,
-- transmitting, via the telecommunications network, the IP data packet to the second multiplexing element using IP multicast,
-- decapsulating, by the second multiplexing element, the IP data packet,
-- transmitting the protocol data unit from the second multiplexing element to the second computing machine and/or to the further second computing machine,
wherein an authentication key is inserted into the IP data packet, by the first multiplexing element, prior to the multicast transmission of the IP data packet via the telecommunications network.

According to the present invention it is thereby advantageously possible to interconnect a plurality of computing machines - in particular computing machines related to remotely located cloud data centers - with a close integration of the routing infrastructure of the telecommunications network, because the IP data packet (including the protocol data unit encapsulated in the IP data packet) is transmitted between the computing machines via the telecommunications network using an IP multicast mechanism. It is preferred according to the present invention to use, both, an IP multicast mechanism and protocol encapsulation to create the connectivity between a plurality of computing machines (including the first, second and further second computing machine)
- for example virtual machines located in the same or in distinct data centers. Preferably, the following main technologies are used:
   -- IPv6 in Multicast Mode Sparse Mode (being used for the transmission of the IP data packet via the telecommunications network using IP multicast), and/or
   -- tunnelling protocol of Layer 2 packets (protocol data unit) and multiplexing capability at each multiplexing element (e.g. a server), and/or
   -- Configuration element (also called orchestrator) with security keys and/or session identifiers, in particular for configuration of the (first and second) multiplexing elements and/or telecommunications network.

According to a preferred embodiment of the present invention, the telecommunications network is an IP network. More preferably, the telecommunications network is an IP network according to IP version 6 or higher, wherein "IP version 6 or higher" is also called IPv6 within the context of the present invention. Preferably, the IPv6 network comprises an IPv6 wide area network (WAN) and an IPv6 local area network (LAN). Preferably the telecommunications network includes network components (hardware or software components) - in particular IPv6 network nodes, e.g. routers - adapted for transmission of IP data packets - in particular IPv6 data packets - using IP multicast - in particular IPv6 multicast. It is most preferred according to the present invention that the telecommunications network is configured for multicast transmission of the IP data packet according to (IPv6) multicast in sparse mode. Preferably, a remote or primary (IPv6) multicast network is realized by the (IPv6) telecommunications network, in particular by the (IPv6) network components.

Within the context of the present invention, a "computing machine" is preferably to be understood as a virtual machine (VM), but may alternatively be also understood as a physical machine.

Within the context of the present invention, encapsulating/decapsulating preferably refers to inverse processes. In particular, encapsulation is the process of wrapping the protocol data unit (into the IP data packet) while decapsulation is the process of opening the IP data packet (i.e. extract the protocol data unit from the IP data packet).

According to a preferred embodiment of the present invention, the first multiplexing element and the first computing machine are located in a first data center, wherein the second multiplexing element, the second computing machine and the further second computing machine are located in the first data center or in a second data center remote from the first data center.

According to the present invention it is thereby advantageously possible to connect a plurality of data centers - including the first and second data center - via the (IPv6) telecommunications network such that the plurality of data centers are receivers of a remote (IPv6) multicast group associated with the telecommunications network. Within the context of the present invention, each data center of the plurality of data center is preferably to be understood as a facility used to house computer systems and associated components, such as, for example, telecommunications and/or storage systems. In particular, each data center may include power supplies, data communications connections, environmental controls and various security devices. Preferably, the plurality of data centers are a plurality of cloud data centers. It is thereby furthermore advantageously possible to place computing machines (in particular virtual machines) associated with the same user or application in different data centers.

According to a preferred embodiment of the present invention, a data frame, preferably an Ethernet frame, or a data packet, preferably an IP data packet, is used as the protocol data unit.

According to the present invention it is thereby advantageously possible to use as the protocol data unit either a data frame, preferably an Ethernet frame, according to layer 2 of the Open Systems Interconnection (OSI) model or another IP data packet, preferably a network packet according to layer 3 of the OSI model. In case the other IP data packet is used for the protocol data unit, the protocol data unit is also called "local IP data packet", wherein the IP data packet (which encapsulates the protocol data unit) is also called "remote IP data packet". Preferably, the remote IP data packet is an IPv6 data packet.

According to a preferred embodiment of the present invention, a remote multicast group is associated with the telecommunications network, wherein the remote multicast group includes at least the second multiplexing element, wherein the IP data packet is transmitted between the first and second multiplexing element using the remote multicast group.

According to the present invention it is thereby advantageously possible to connect a plurality of data centers - including the first and second data center - via multicast addresses, wherein the multicast addresses are preferably IPv6 multicast addresses. Preferably, IPv6 multicast in sparse mode is used on the network components (routers) of the telecommunications network to create a remote multicast group that connects all the data centers - i.e. the multiplexing elements of the respective data centers - via IPv6 multicast addresses. In this multicast model, a packet sent to a multicast group, is forwarded to all other participants (i.e. multiplexing elements of the data centers) of the multicast group.

According to a preferred embodiment of the present invention,
-- a first local multicast group is associated with the first multiplexing element, wherein the first local multicast group includes the first computing machine, wherein the protocol data unit is transmitted between the first computing machine and the first multiplexing element using the first local multicast group, and/or
-- a second local multicast group is associated with the second multiplexing element, wherein the second local multicast group includes the second computing machine and the further second computing machine, wherein the protocol data unit is transmitted between the second multiplexing element and the second computing machine and/or the further second computing machine using the second local multicast group.

According to the present invention it is thereby advantageously possible to use local and remote multicast to optimize the routing of network traffic between the computing machines such that the network traffic is restricted to dedicated routes (e.g. multicast routes) along the telecommunications network.

According to a preferred embodiment of the present invention, a multiplexing element is a (hardware or software) component (located within a data center) being configured to:
-- receive a protocol data unit from a sending computing machine connected to the multiplexing element (and located in the same data center as the multiplexing element), and/or
-- encapsulate the received protocol data unit in an IP data packet, and/or
-- include a session identifier (session ID) associated with the computing machine to the IP data packet, and/or
-- transmit the IP data packet to the remote (IPv6) multicast group associated with the telecommunications network.

According to a preferred embodiment of the present invention, a multiplexing element is a (hardware or software) component being configured to:
-- receive an IP data packet (i.e. the IP data packet or a further IP data packet) from the remote multicast group, wherein the IP data packet includes the session ID associated with the sending computing machine, and/or
-- decapsulate the IP data packet (such that the protocol data unit is extracted from the IP data packet), and/or
-- extract the session ID associated with the sending computing machine from the IP data packet, and/or
-- transmit the protocol data unit (via a local multicast network associated with the multiplexing element) to a local multicast group associated with the same session ID as the sending machine, wherein the protocol data unit is transmitted to a receiving computing machine (e.g. the second and/or further second computing machine).

According to a preferred embodiment of the present invention, a session identifier is associated with the first computing machine,
-- wherein the session identifier is included within the protocol data unit, by the first computing machine, prior to transmitting the protocol data unit from the first computing machine to the first multiplexing element, or
-- wherein the session identifier is included within the IP data packet, by the first multiplexing element, prior to the multicast transmission of the IP data packet to the second multiplexing element via the telecommunications network.

According to the present invention it is thereby advantageously possible to use the session identifier to enable computing machines connected to the same multiplexing element to share the same connection over the remote multicast network. Thereby, the management of the remote multicast network is simplified such that only one remote multicast network group is required to connect all data centers.

Within the context of the present invention, a session identifier - which is also called a session ID - is preferably used for describing and/or identification of a relationship between computing machines (which may be connected to the same multiplexing element or to distinct multiplexing elements). Preferably, the use of the session identifier enables the sharing of the same telecommunication link to the remote multicast network for all computing machines connected to the same multiplexing element. Therefore, only one remote multicast network group is required (although more than one remote multicast group may be employed) to connect all the data centers with each other, and one or more local multicast groups are used for local traffic (between a multiplexing element and the associated computing machines). Preferably, the session ID only has a meaning inside the same multicast group. According to a preferred embodiment of the present invention, the session ID is a limited field (e.g. of 32 binary digits (bits), 64 bits or more bits) of the IP data packet and/or of the protocol data unit. When a single (remote) multicast group might run out of session ID values, another multicast group is preferably created, wherein another set of session IDs is provided.

According to a preferred embodiment of the present invention, the protocol data unit is transmitted from the second multiplexing element to the second computing machine and/or to the further second computing machine depending on the session identifier.

According to the present invention it is thereby advantageously possible to enable the use of the same telecommunication link to the remote multicast network for all computing machines connected to the same multiplexing element.

According to a preferred embodiment of the present invention,
-- the protocol data unit is transmitted from the second multiplexing element to the second computing machine, only in case the second computing machine is associated with the session identifier included in the IP data packet, and/or
-- the protocol data unit is transmitted from the second multiplexing element to the further second computing machine, only in case the further second computing machine is associated with the session identifier included in the IP data packet.

According to the present invention it is thereby advantageously possible to simplify the management of the remote multicast network such that only one remote multicast network group is required to connect all data centers.

According to the present invention, an authentication key is inserted into the IP data packet, by the first multiplexing element, prior to the multicast transmission of the IP data packet via the telecommunications network.

According to the present invention it is thereby advantageously possible to insert authentication keys in each IPv6 data packet being sent over the remote multicast network such that man-in-the-middle attacks are avoided.

The present invention also relates to system for transmitting a protocol data unit via a telecommunications network, the system comprising:
-- the telecommunications network,
-- a first and second multiplexing element connected to the telecommunications network,
-- a first computing machine connected to the first multiplexing element,
-- a second and a further second computing machine connected to the second multiplexing element,
wherein the first computing machine is configured for transmitting the protocol data unit to the first multiplexing element, wherein the first multiplexing element is configured for encapsulating the protocol data unit in an Internet Protocol (IP) data packet, wherein the telecommunications network is configured for IP multicast transmission of the IP data packet from the first multiplexing element to the second multiplexing element, wherein the second multiplexing element is configured for decapsulating the IP data packet, wherein the second multiplexing element is configured for transmitting the protocol data unit to the second computing machine and/or to the further second computing machine, wherein an authentication key is inserted into the IP data packet, by the first multiplexing element, prior to the multicast transmission of the IP data packet via the telecommunications network.

According to the present invention it is thereby advantageously possible to provide a system for transmitting a protocol data unit via a telecommunications network such that computing machines are interconnect with a close integration of the underlying routing infrastructure of the telecommunications network. In particular, this is achieved because the IP data packet (including the protocol data unit encapsulated in the IP data packet) is transmitted between the computing machines via the telecommunications network using an IP multicast mechanism. It is preferred according to the present invention to use, both, an IP multicast mechanism and protocol encapsulation to create the connectivity between a plurality of computing machines (including the first, second and further second computing machine) - for example virtual machines located in the same or in distinct data centers.

According to a preferred embodiment of the present invention, the system includes a configuration element, the configuration element being configured for managing of authentication keys and/or session identifiers on the first and/or second multiplexing element.

According to the present invention it is thereby advantageously possible to provide a configuration element (orchestrator) which is configured for managing the authentication keys used by the multiplexing elements. The authentication key is preferably replaced every few seconds on all multiplexing elements. The configuration element is preferably adapted for configuring the session identifiers on the multiplexing elements.

According to a preferred embodiment of the present invention, the first multiplexing element and the first computing machine are located in a first data center, wherein the second multiplexing element, the second computing machine and the further second computing machine are located in the first data center or in a second data center remote from the first data center.

According to the present invention it is thereby advantageously possible to provide a system for transmitting a protocol data unit via a telecommunications network such that computing machines of remotely located cloud data centers are interconnect with a close integration of the underlying routing infrastructure of the telecommunications network. Moreover, a plurality of data centers - including the first and second data center - are connected via the (IPv6) telecommunications network such that the plurality of data centers are receivers of a remote (IPv6) multicast group associated with the telecommunications network. It is thereby furthermore advantageously possible to place computing machines (in particular virtual machines) associated with the same user or application in different data centers.

Furthermore, the present invention relates to a program comprising a computer readable program code which, when executed on a computer, a computing machine, a network component of a telecommunications network and/or on a multiplexing element causes the computer, the computing machine, the network component of the telecommunications network and/or the multiplexing element to perform a method according to the present invention.

Furthermore, the present invention relates to a computer program product comprising a computer program stored on a storage medium, the computer program comprising program code which, when executed on a computer, a computing machine, a network component of a telecommunications network and/or on a multiplexing element causes the computer, the computing machine, the network component of the telecommunications network and/or the multiplexing element to perform a method according to the present invention.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

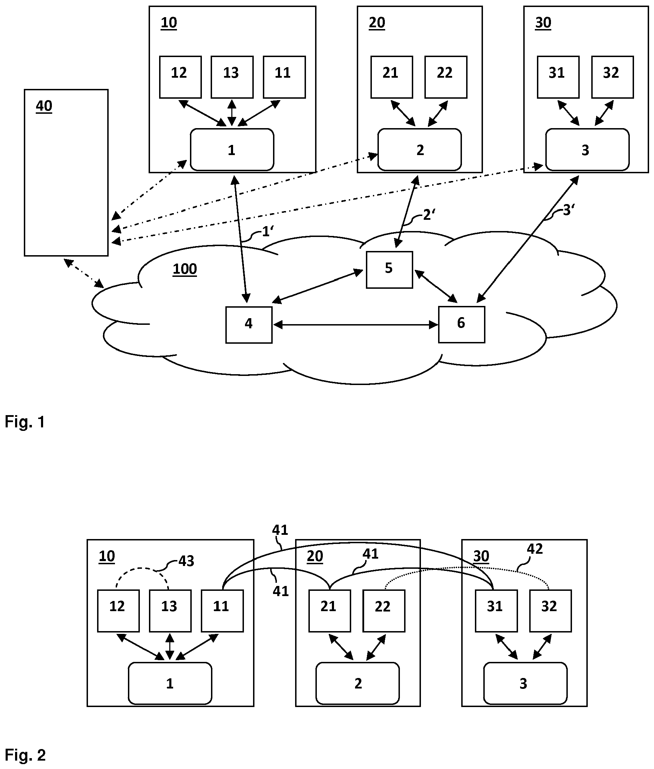

Figures 1 and 2 schematically illustrate a system for transmitting a protocol data unit via a telecommunications network according to preferred embodiments of the present invention.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a system for transmitting a protocol data unit via a telecommunications network 100 according to a preferred embodiment of the present invention is illustrated schematically. The system comprises the telecommunications network 100 and a plurality of data centers 10, 20, 30 connected to the telecommunications network 100, wherein each data center of the plurality of data centers 10, 20, 30 comprises a multiplexing element 1, 2, 3. The telecommunications network 100 is preferably an IP telecommunications network, more preferably an IPv6 telecommunications network, wherein the telecommunications network 100 includes network components 4, 5, 6 (e.g. routers, preferably IPv6 routers). Here, a first network component 4, a second network component 5 and a third network component 6 are shown.

A first data center 10 of the plurality of data centers 10, 20, 30 has a first multiplexing element 1 and a plurality of first computing machines 11, 12, 13 associated with the first multiplexing element 1. Here, the plurality of first computing machines 11, 12, 13 include a first computing machine 11, a further first computing machine 12 and a still further first computing machine 13. A second data center 20 of the plurality of data centers 10, 20, 30 has a second multiplexing element 2 and a plurality of second computing machines 21, 22 associated with the second multiplexing element 2. Here, the plurality of second computing machines 21, 22 include a second computing machine 21 and a further second computing machine 22. A third data center 30 of the plurality of data centers 10, 20, 30 has a third multiplexing element 3 and a plurality of third computing machines 31, 32 associated with the a third multiplexing element 3. Here, the plurality of third computing machines 31, 32 include a third computing machine 31 and a further third computing machine 32.

The first multiplexing element 1 is connected to the telecommunications network 100 (i.e. to the first network component 5) via a first telecommunication link 1', the second multiplexing element 2 is connected to the telecommunications network 100 (i.e. to the second network component 6) via a second telecommunication link 2', the third multiplexing element 3 is connected to the telecommunications network 100 (i.e. to the third network component 7) via a third communication link 3'.

It is preferred according to the present invention, that the network components 4, 5, 6 are configured to use IPv6 multicast in sparse mode such that a remote multicast network for the creation of a remote multicast group is provided by the network components 4, 5, 6, wherein the remote multicast network connects all data centers 10, 20, 30 of the plurality of data centers 10, 20, 30 - in particular each multiplexing element 1, 2, 3 of the plurality of data centers 10, 20, 30 - via IPv6 multicast addresses (associated with the remote multicast group). In this multicast model, an IP data packet sent to the remote multicast group is forwarded to all other participants (i.e. multiplexing elements 1, 2, 3) of the multicast group.

Preferably, the plurality of first computing machines 11, 12, 13 are (indirectly) coupled to the telecommunications network 100 via the first telecommunication link 1', wherein the plurality of second computing machines 21, 22 are (indirectly) coupled to the telecommunications network 100 via the second telecommunication link 2' and/or the plurality of third computing machines 31, 32 are (indirectly) coupled to the telecommunications network via the third telecommunication link 3'.

Preferably, the system furthermore includes a configuration element 40, wherein the configuration element 40 is configured for managing of authentication keys and/or session identifiers 41, 42, 43 (shown in Figure 2) on the first and/or second and/or third multiplexing element 1, 2, 3. The authentication keys are preferably replaced, by the configuration element 40, on the multiplexing elements 1, 2, 3 at least once per 60 seconds, more preferably at least once per 30 seconds, most preferably at least once per 10 seconds.

In Figure 2, a system for transmitting a protocol data unit via a telecommunications network according to a preferred embodiment of the present invention is illustrated schematically. Preferably, the embodiment according to Figure 2 is substantially identical to the embodiment according to Figure 1. In Figure 2 the session identifiers 41, 42, 43 are illustrated. Preferably, the session identifiers 41, 42, 43 enable
-- the plurality of first computing machines 11, 12, 13 connected to the (same) first multiplexing element 1 to share the (same) first telecommunication link 1' to the remote multicast network associated with the telecommunications network 100, and/or
-- the plurality of second computing machines 21, 22 connected to the (same) second multiplexing element 2 to share the (same) second telecommunication link 2' to the remote multicast network associated with the telecommunications network 100, and/or
-- the plurality of third computing machines 31, 32 connected to the (same) third multiplexing element 3 to share the (same) third telecommunication link 3' to the remote multicast network associated with the telecommunications network 100. Therefore, only one remote multicast group is required to connect all data centers (associated with the same remote multicast group). Preferably, each data center of the plurality of data centers 10, 20, 30 includes a local multicast network for the creation of a local multicast group for local traffic (within the respective data center).

Preferably, the configuration element 40 is configured for managing of authentication keys and/or session identifiers 41, 42, 43 on the first and/or second and/or third multiplexing element 1, 2, 3, wherein the session identifiers 41, 42, 43 are used to indicate (i.e. to the first, second and/or third multiplexing elements 1, 2, 3) which one of the computing machine 11, 12, 13, 21, 22, 31, 32 is related to another. According to the example shown in Figure 2, the first computing machine 11, the second computing machine 21 and the third computing machine 31 share the same first session ID 41 of the session identifiers 41, 42, 43, wherein the further second computing machine 22 and the further third computing machine 32 share the same second session ID 42 of the session identifiers 41, 42, 43, wherein the further first computing machine 11 and the still further first computing machine 13 share the same third session ID 43 of the session identifiers 41, 42, 43. Preferably, the session identifiers are Virtual Local Area Network (VLAN) session IDs according to layer 3 of the OSI model.

According to one example, the first multiplexing element 1 receives a protocol data unit (e.g. a layer 2 Ethernet frame) from the first computing machine 11 (e.g. a virtual machine) and encapsulates the protocol data unit in an IPv6 data packet, wherein the first session ID 41 (which is associated with the first computing machine 11) is included with the IPv6 data packet (by the first multiplexing element 1).

The IPv6 (multicast) data packet is then sent via the remote multicast network (associated with the telecommunications network 100) to the remote multicast group (associated with the plurality of data centers 10, 20, 30), which remote multicast group includes at least the second and/or third multiplexing elements 2, 3 and/or the first multiplexing element 1. Here, the second and/or third multiplexing elements 2, 3 are located in remote data centers 20, 30, but may likewise be located in the first data center 10.

The IPv6 data packet is received at the second and third multiplexing elements 2, 3, which are receivers of the remote multicast group. At the second multiplexing element 2, the IPv6 data packet is decapsulated (i.e. the protocol data unit is extracted from the IPv6 data packet, e.g. by stripping of the headers of the IPv6 data packet). Furthermore, the second multiplexing element 2 extracts the first session identifier 41 sent along with the IPv6 data packet. The second multiplexing element 2 transmits the protocol data unit to the second computing machine 22, which second computing machine 21 is associated with the first session ID 41. The protocol data unit is, in particular, only sent to the second computing machine 21 - but not to the further second computing machine 22 - because the further second computing machine 22 is associated with the second session ID 42 (but not with the first session ID 41). Preferably, the protocol data unit is transmitted from the second multiplexing element 2 to the second computing machine 21 using a second local multicast group of the second data center 20, which second local multicast group is associated with the first session identifier 41.

## Claims

1. Method for transmitting a protocol data unit via a telecommunications network (100), wherein a first multiplexing element (1) is connected to the telecommunications network (100), wherein a second multiplexing element (2) is connected to the telecommunications network (100), wherein a first computing machine (11) is connected to the first multiplexing element (1), wherein a second computing machine (21) and a further second computing machine (22) are connected to the second multiplexing element (2), the method comprising the steps of:
-- transmitting the protocol data unit from the first computing machine (11) to the first multiplexing element (1),
-- encapsulating, by the first multiplexing element (1), the protocol data unit in an Internet Protocol (IP) data packet,
-- transmitting, via the telecommunications network (100), the IP data packet to the second multiplexing element (2) using IP multicast,
-- decapsulating, by the second multiplexing element (2), the IP data packet,
-- transmitting the protocol data unit from the second multiplexing element (2) to the second computing machine (21) and/or to the further second computing machine (22), **characterized in that** an authentication key is inserted into the IP data packet, by the first multiplexing element (1), prior to the multicast transmission of the IP data packet via the telecommunications network (100).

2. Method according to claim 1, wherein the first multiplexing element (1) and the first computing machine (11) are located in a first data center (10), wherein the second multiplexing element (2), the second computing machine (21) and the further second computing machine (22) are located in the first data center (10) or in a second data center (20) remote from the first data center (10).

3. Method according to any one of the preceding claims, wherein a data frame, preferably an Ethernet frame, or a data packet, preferably an IP data packet, is used as the protocol data unit.

4. Method according to any one of the preceding claims, wherein a remote multicast group is associated with the telecommunications network (100), wherein the remote multicast group includes at least the second multiplexing element (2), wherein the IP data packet is transmitted between the first and second multiplexing element (1, 2) using the remote multicast group.

5. Method according to any one of the preceding claims,
-- wherein a first local multicast group is associated with the first multiplexing element (1), wherein the first local multicast group includes the first computing machine (11), wherein the protocol data unit is transmitted between the first computing machine (11) and the first multiplexing element (1) using the first local multicast group, and/or
-- wherein a second local multicast group is associated with the second multiplexing element (2), wherein the second local multicast group includes the second computing machine (21) and the further second computing machine (22), wherein the protocol data unit is transmitted between the second multiplexing element (2) and the second computing machine (21) and/or the further second computing machine (22) using the second local multicast group.

6. Method according to any one of the preceding claims, wherein a session identifier (41) is associated with the first computing machine (11),
-- wherein the session identifier (41) is included within the protocol data unit, by the first computing machine (11), prior to transmitting the protocol data unit from the first computing machine (11) to the first multiplexing element (1), or
-- wherein the session identifier (41) is included within the IP data packet, by the first multiplexing element (1), prior to the multicast transmission of the IP data packet to the second multiplexing element (2) via the telecommunications network (100).

7. Method according to any one of the preceding claims, wherein the protocol data unit is transmitted, from the second multiplexing element (2) to the second computing machine (21) and/or to the further second computing machine (22), depending on the session identifier (41).

8. Method according to any one of the preceding claims,
-- wherein the protocol data unit is transmitted from the second multiplexing element (2) to the second computing machine (21), only in case the second computing machine (21) is associated with the session identifier (41) included in the IP data packet, and/or
-- wherein the protocol data unit is transmitted from the second multiplexing element (2) to the further second computing machine (22), only in case the further second computing machine (22) is associated with the session identifier (41) included in the IP data packet.

9. System for transmitting a protocol data unit via a telecommunications network (100), the system comprising:
-- the telecommunications network (100),
-- a first and second multiplexing element (1, 2) connected to the telecommunications network (100),
-- a first computing machine (11) connected to the first multiplexing element (1),
-- a second and a further second computing machine (21, 22) connected to the second multiplexing element (2),
wherein the first computing machine (11) is configured for transmitting the protocol data unit to the first multiplexing element (1), wherein the first multiplexing element (1) is configured for encapsulating the protocol data unit in an Internet Protocol (IP) data packet, wherein the telecommunications network (100) is configured for IP multicast transmission of the IP data packet from the first multiplexing element (1) to the second multiplexing element (2), wherein the second multiplexing element (2) is configured for decapsulating the IP data packet, wherein the second multiplexing element (2) is configured for transmitting the protocol data unit to the second computing machine (21) and/or to the further second computing machine (22), **characterized in that** the system is configured such that an authentication key is inserted into the IP data packet, by the first multiplexing element (1), prior to the multicast transmission of the IP data packet via the telecommunications network (100).

10. System according to claim 10, wherein the system includes a configuration element (40), the configuration element (40) being configured for managing of authentication keys and/or session identifiers (41, 42, 43) on the first and/or second multiplexing element (1, 2).

11. System according to any one of claims 10 or 11, wherein the first multiplexing element (1) and the first computing machine (11) are located in a first data center (10), wherein the second multiplexing element (2), the second computing machine (21) and the further second computing machine (22) are located in the first data center (10) or in a second data center (20) remote from the first data center (10).

12. Program comprising a computer readable program code which, when executed on a computer, a computing machine (11, 12, 13, 21, 21, 22, 31, 32), a network component (4, 5, 6) of a telecommunications network (100) and/or on a multiplexing element (1, 2, 3) causes the computer, the computing machine (11, 12, 13, 21, 21, 22, 31, 32), the network component (4, 5, 6) of the telecommunications network (100) and/or the multiplexing element (1, 2, 3) to perform a method according to any one of claims 1 to 8.

13. Computer program product comprising a computer program stored on a storage medium, the computer program comprising program code which, when executed on a computer, a computing machine (11, 12, 13, 21, 21, 22, 31, 32), a network component (4, 5, 6) of a telecommunications network (100) and/or on a multiplexing element (1, 2, 3) causes the computer, the computing machine (11, 12, 13, 21, 21, 22, 31, 32), the network component (4, 5, 6) of the telecommunications network (100) and/or the multiplexing element (1, 2, 3) to perform a method according to any one of claims 1 to 8.

## Patentansprüche

1. Verfahren zum Senden einer Protokolldateneinheit über ein Telekommunikationsnetz (100), wobei ein erstes Multiplexier-Element (1) mit dem Telekommunikationsnetz (100) verbunden ist, wobei ein zweites Multiplexier-Element (2) mit dem Telekommunikationsnetz (100) verbunden ist, wobei eine erste Computermaschine (11) mit dem ersten Multiplexier-Element (1) verbunden ist, wobei eine zweite Computermaschine (21) und weitere zweite Computermaschine (22) mit dem zweiten Multiplexier-Element (2) verbunden sind, wobei das Verfahren folgende Schritte umfasst:
- Senden der Protokolldateneinheit von der ersten Computermaschine (11) zu dem ersten Multiplexier-Element (1),
- Verkapseln, durch das erste Multiplexier-Element (1), der Protokolldateneinheit in einem Internet Protocol (IP)-Datenpaket,
- Senden, über das Telekommunikationsnetz (100), des IP-Datenpaketes an das zweite Multiplexier-Element (2) unter Verwendung von IP-Multicast,
- Entkapseln, durch das zweite Multiplexier-Element (2), des IP-Datenpaketes,
- Senden der Protokolldateneinheit von dem zweiten Multiplexier-Element (2) zu der zweiten Computermaschine (21) und/oder zu der weiteren zweiten Computermaschine (22),
**dadurch gekennzeichnet, dass**
durch das erste Multiplexier-Element (1), vor der Multicast-Übertragung des IP-Datenpaketes über das Telekommunikationsnetz (100), ein Authentifizierungsschlüssel in das IP-Datenpaket eingefügt wird.

2. Verfahren nach Anspruch 1, wobei das erste Multiplexier-Element (1) und die erste Computermaschine (11) in einem ersten Datenzentrum (10) angeordnet sind, wobei das zweite Multiplexier-Element (2), die zweite Computermaschine (21) und die weitere zweite Computermaschine (22) in dem ersten Datenzentrum (10) oder in einem zweiten Datenzentrum (20), das von dem ersten Datenzentrum (10) räumlich abgesetzt ist, angeordnet sind.

3. Verfahren nach einem der vorangehenden Ansprüche, wobei ein Daten-Frame, bevorzugt ein Ethernet-Frame, oder ein Datenpaket, bevorzugt ein IP-Datenpaket, als die Protokolldateneinheit verwendet wird.

4. Verfahren nach einem der vorangehenden Ansprüche, wobei eine räumlich abgesetzte Multicast-Gruppe mit dem Telekommunikationsnetz (100) verknüpft ist, wobei die räumlich abgesetzte Multicast-Gruppe mindestens das zweite Multiplexier-Element (2) umfasst, wobei das IP-Datenpaket zwischen dem ersten und dem zweiten Multiplexier-Element (1, 2) unter Verwendung der räumlich abgesetzten Multicast-Gruppe gesendet wird.

5. Verfahren nach einem der vorangehenden Ansprüche,
- wobei eine erste lokale Multicast-Gruppe mit dem ersten Multiplexier-Element (1) verknüpft ist, wobei die erste lokale Multicast-Gruppe die erste Computermaschine (11) umfasst, wobei die Protokolldateneinheit zwischen der ersten Computermaschine (11) und dem ersten Multiplexier-Element (1) unter Verwendung der ersten lokalen Multicast-Gruppe gesendet wird, und/oder
- wobei eine zweite lokale Multicast-Gruppe mit dem zweiten Multiplexier-Element (2) verknüpft ist, wobei die zweite lokale Multicast-Gruppe die zweite Computermaschine (21) und die weitere zweite Computermaschine (22) umfasst, wobei die Protokolldateneinheit zwischen dem zweiten Multiplexier-Element (2) und der zweiten Computermaschine (21) und/oder der weiteren zweiten Computermaschine (22) unter Verwendung der zweiten lokalen Multicast-Gruppe gesendet wird.

6. Verfahren nach einem der vorangehenden Ansprüche, wobei ein Sitzungsidentifikator (41) mit der ersten Computermaschine (11) verknüpft ist,
- wobei der Sitzungsidentifikator (41), vor dem Senden der Protokolldateneinheit von der ersten Computermaschine (11) zu dem ersten Multiplexier-Element (1), durch die erste Computermaschine (11) in die Protokolldateneinheit eingebunden wird, oder
- wobei der Sitzungsidentifikator (41), vor der Multicast-Übertragung des IP-Datenpaketes über das Telekommunikationsnetz (100) an das zweite Multiplexier-Element (2), durch das erste Multiplexier-Element (1) in das IP-Datenpaket eingebunden wird.

7. Verfahren nach einem der vorangehenden Ansprüche, wobei die Protokolldateneinheit von dem zweiten Multiplexier-Element (2) zu der zweiten Computermaschine (21) und/oder zu der weiteren zweiten Computermaschine (22) in Abhängigkeit von dem Sitzungsidentifikator (41) gesendet wird.

8. Verfahren nach einem der vorangehenden Ansprüche,
- wobei die Protokolldateneinheit nur dann von dem zweiten Multiplexier-Element (2) zu der zweiten Computermaschine (21) gesendet wird, wenn die zweite Computermaschine (21) mit dem in das IP-Datenpaket eingebundenen Sitzungsidentifikator (41) verknüpft ist, und/oder
- wobei die Protokolldateneinheit nur dann von dem zweiten Multiplexier-Element (2) zu der weiteren zweiten Computermaschine (22) gesendet wird, wenn die weitere zweite Computermaschine (22) mit dem in das IP-Datenpaket eingebundenen Sitzungsidentifikator (41) verknüpft ist.

9. System zum Senden einer Protokolldateneinheit über ein Telekommunikationsnetz (100), wobei das System Folgendes umfasst:
- das Telekommunikationsnetz (100),
- ein erstes und ein zweites Multiplexier-Element (1, 2), die mit dem Telekommunikationsnetz (100) verbunden sind,
- eine erste Computermaschine (11), die mit dem ersten Multiplexier-Element (1) verbunden ist,
- eine zweite und eine weitere zweite Computermaschine (21, 22), die mit dem zweiten Multiplexier-Element (2) verbunden sind,
wobei die erste Computermaschine (11) dafür ausgestaltet ist, die Protokolldateneinheit zu dem ersten Multiplexier-Element (1) zu senden, wobei das erste Multiplexier-Element (1) dafür ausgestaltet ist, die Protokolldateneinheit in einem Internet Protocol (IP)-Datenpaket zu verkapseln, wobei das Telekommunikationsnetz (100) für eine IP-Multicast-Übertragung des IP-Datenpaketes von dem ersten Multiplexier-Element (1) zu dem zweiten Multiplexier-Element (2) ausgestaltet ist, wobei das zweite Multiplexier-Element (2) dafür ausgestaltet ist, das IP-Datenpaket zu entkapseln, wobei das zweite Multiplexier-Element (2) dafür ausgestaltet ist, die Protokolldateneinheit zu der zweiten Computermaschine (21) und/oder zu der weiteren zweiten Computermaschine (22) zu senden,
**dadurch gekennzeichnet, dass**
das System so ausgestaltet ist, dass, vor der Multicast-Übertragung des IP-Datenpaketes über das Telekommunikationsnetz (100), durch das erste Multiplexier-Element (1) ein Authentifizierungsschlüssel in das IP-Datenpaket eingefügt wird.

10. System nach Anspruch 10, wobei das System ein Ausgestaltungselement (40) umfasst, wobei das Ausgestaltungselement (40) dafür ausgestaltet ist, Authentifizierungsschlüssel und/oder Sitzungsidentifikatoren (41, 42, 43) auf dem ersten und/oder dem zweiten Multiplexier-Element (1, 2) zu verwalten.

11. System nach einem der Ansprüche 10 oder 11, wobei das erste Multiplexier-Element (1) und die erste Computermaschine (11) in einem ersten Datenzentrum (10) angeordnet sind, wobei das zweite Multiplexier-Element (2), die zweite Computermaschine (21) und die weitere zweite Computermaschine (22) in dem ersten Datenzentrum (10) oder in einem zweiten Datenzentrum (20), das von dem ersten Datenzentrum (10) räumlich abgesetzt ist, angeordnet sind.

12. Programm, das einen computerlesbaren Programmcode umfasst, der, wenn er auf einem Computer, einer Computermaschine (11, 12, 13, 21, 21, 22, 31, 32), einer Netzkomponente (4, 5, 6) eines Telekommunikationsnetzes (100) und/oder auf einem Multiplexier-Element (1, 2, 3) ausgeführt wird, den Computer, die Computermaschine (11, 12, 13, 21, 21, 22, 31, 32), die Netzkomponente (4, 5, 6) des Telekommunikationsnetzes (100) und/oder das Multiplexier-Element (1, 2, 3) veranlasst, ein Verfahren nach einem der Ansprüche 1 bis 8 auszuführen.

13. Computerprogrammprodukt, das ein Computerprogramm umfasst, das auf einem Speichermedium gespeichert ist, wobei das Computerprogramm Programmcode umfasst, der, wenn er auf einem Computer, einer Computermaschine (11, 12, 13, 21, 21, 22, 31, 32), einer Netzkomponente (4, 5, 6) eines Telekommunikationsnetzes (100) und/oder auf einem Multiplexier-Element (1, 2, 3) ausgeführt wird, den Computer, die Computermaschine (11, 12, 13, 21, 21, 22, 31, 32), die Netzkomponente (4, 5, 6) des Telekommunikationsnetzes (100) und/oder das Multiplexier-Element (1, 2, 3) veranlasst, ein Verfahren nach einem der Ansprüche 1 bis 8 auszuführen.

## Revendications

1. Procédé de transmission d'une unité de données de protocole via un réseau de télécommunication (100), dans lequel un premier élément de multiplexage (1) est connecté au réseau de télécommunication (100), dans lequel un second élément de multiplexage (2) est connecté au réseau de télécommunication (100), dans lequel une première machine de calcul (11) est connectée au premier élément de multiplexage (1), dans lequel une seconde machine de calcul (21) et une autre seconde machine de calcul (22) sont connectées au second élément de multiplexage (2), le procédé comprenant les étapes consistant à :
- transmettre l'unité de données de protocole à partir de la première machine de calcul (11) au premier élément de multiplexage (1),
- encapsuler, par le premier élément de multiplexage (1), l'unité de données de protocole dans un paquet de données de protocole Internet (IP),
- transmettre, via le réseau de télécommunication (100), le paquet de données IP au second élément de multiplexage (2) en utilisant la multidiffusion IP,
- décapsuler, par le second élément de multiplexage (2), le paquet de données IP,
- transmettre l'unité de données de protocole à partir du second élément de multiplexage (2) à la seconde machine de calcul (21) et/ou à l'autre seconde machine de calcul (22),
**caractérisé en ce que**
une clé d'authentification est insérée dans le paquet de données IP, par le premier élément de multiplexage (1), avant la transmission en multidiffusion du paquet de données IP via le réseau de télécommunication (100).

2. Procédé selon la revendication 1, dans lequel le premier élément de multiplexage (1) et la première machine de calcul (11) sont situés dans un premier centre de données (10), dans lequel le second élément de multiplexage (2), la seconde machine de calcul (21) et l'autre seconde machine de calcul (22) sont situés dans le premier centre de données (10) ou dans un second centre de données (20) distant du premier centre de données (10).

3. Procédé selon l'une quelconque des revendications précédentes, dans lequel une trame de données, de préférence une trame Ethernet, ou un paquet de données, de préférence un paquet de données IP, est utilisé en tant qu'unité de données de protocole.

4. Procédé selon l'une quelconque des revendications précédentes, dans lequel un groupe de multidiffusion distant est associé au réseau de télécommunication (100), dans lequel le groupe de multidiffusion distant comprend au moins le second élément de multiplexage (2), dans lequel le paquet de données IP est transmis entre le premier et le second élément de multiplexage (1, 2) en utilisant le groupe de multidiffusion distant.

5. Procédé selon l'une quelconque des revendications précédentes,
- dans lequel un premier groupe de multidiffusion local est associé au premier élément de multiplexage (1), dans lequel le premier groupe de multidiffusion local comprend la première machine de calcul (11), dans lequel l'unité de données de protocole est transmise entre la première machine de calcul (11) et le premier élément de multiplexage (1) en utilisant le premier groupe de multidiffusion local, et/ou
- dans lequel un second groupe de multidiffusion local est associé au second élément de multiplexage (2), dans lequel le second groupe de multidiffusion local comprend la seconde machine de calcul (21) et l'autre seconde machine de calcul (22), dans lequel l'unité de données de protocole est transmise entre le second élément de multiplexage (2) et la seconde machine de calcul (21) et/ou l'autre seconde machine de calcul (22) en utilisant le second groupe de multidiffusion local.

6. Procédé selon l'une quelconque des revendications précédentes, dans lequel un identificateur de session (41) est associé à la première machine de calcul (11),
- dans lequel l'identificateur de session (41) est inclus dans l'unité de données de protocole, par la première machine de calcul (11), avant la transmission de l'unité de données de protocole de la première machine de calcul (11) au premier élément de multiplexage (1), ou
- dans lequel l'identificateur de session (41) est inclus dans le paquet de données IP, par le premier élément de multiplexage (1), avant la transmission en multidiffusion du paquet de données IP au second élément de multiplexage (2) via le réseau de télécommunication (100).

7. Procédé selon l'une quelconque des revendications précédentes, dans lequel l'unité de données de protocole est transmise, à partir du second élément de multiplexage (2) à la seconde machine de calcul (21) et/ou à l'autre seconde machine de calcul (22), en fonction de l'identificateur de session (41).

8. Procédé selon l'une quelconque des revendications précédentes,
- dans lequel l'unité de données de protocole est transmise à partir du second élément de multiplexage (2) à la seconde machine de calcul (21), uniquement dans le cas où la seconde machine de calcul (21) est associée à l'identificateur de session (41) inclus dans le paquet de données IP, et/ou
- dans lequel l'unité de données de protocole est transmise à partir du second élément de multiplexage (2) à l'autre seconde machine de calcul (22), uniquement dans le cas où l'autre seconde machine de calcul (22) est associée à l'identificateur de session (41) inclus dans le paquet de données IP.

9. Système de transmission d'une unité de données de protocole via un réseau de télécommunication (100), le système comprenant :
- le réseau de télécommunication (100),
- un premier et un second élément de multiplexage (1, 2) connectés au réseau de télécommunication (100),
- une première machine de calcul (11) connectée au premier élément de multiplexage (1),
- une seconde et une autre seconde machine de calcul (21, 22) connectées au second élément de multiplexage (2),
dans lequel la première machine de calcul (11) est configurée pour transmettre l'unité de données de protocole au premier élément de multiplexage (1), dans lequel le premier élément de multiplexage (1) est configuré pour encapsuler l'unité de données de protocole dans un paquet de données de protocole Internet (IP), dans lequel le réseau de télécommunication (100) est configuré pour la transmission en multidiffusion IP du paquet de données IP à partir du premier élément de multiplexage (1) au second élément de multiplexage (2), dans lequel le second élément de multiplexage (2) est configuré pour décapsuler le paquet de données IP, dans lequel le second élément de multiplexage (2) est configuré pour transmettre l'unité de données de protocole à la seconde machine de calcul (21) et/ou à l'autre seconde machine de calcul (22),
**caractérisé en ce que**
le système est configuré de sorte qu'une clé d'authentification soit insérée dans le paquet de données IP, par le premier élément de multiplexage (1), avant la transmission en multidiffusion du paquet de données IP via le réseau de télécommunication (100).

10. Système selon la revendication 10, dans lequel le système comprend un élément de configuration (40), l'élément de configuration (40) étant configuré pour gérer des clés d'authentification et/ou des identificateurs de session (41, 42, 43) sur le premier et/ou le second élément de multiplexage (1, 2).

11. Système selon l'une quelconque des revendications 10 ou 11, dans lequel le premier élément de multiplexage (1) et la première machine de calcul (11) sont situés dans un premier centre de données (10), dans lequel le second élément de multiplexage (2), la seconde machine de calcul (21) et l'autre seconde machine de calcul (22) sont situés dans le premier centre de données (10) ou dans un second centre de données (20) distant du premier centre de données (10).

12. Programme comprenant un code de programme lisible par ordinateur qui, lorsqu'il est exécuté sur un ordinateur, une machine de calcul (11, 12, 13, 21, 21, 22, 31, 32), un composant de réseau (4, 5, 6) d'un réseau de télécommunication (100) et/ou sur un élément de multiplexage (1, 2, 3), amène l'ordinateur, la machine de calcul (11, 12, 13, 21, 21, 22, 31, 32), le composant de réseau (4, 5, 6) du réseau de télécommunication (100) et/ou l'élément de multiplexage (1, 2, 3) à effectuer un procédé selon l'une quelconque des revendications 1 à 8.

13. Produit programme d'ordinateur comprenant un programme d'ordinateur stocké sur un support de stockage, le programme d'ordinateur comprenant un code de programme qui, lorsqu'il est exécuté sur un ordinateur, une machine de calcul (11, 12, 13, 21, 21, 22, 31, 32), un composant de réseau (4, 5, 6) d'un réseau de télécommunication (100) et/ou sur un élément de multiplexage (1, 2, 3), amène l'ordinateur, la machine de calcul (11, 12, 13, 21, 21, 22, 31, 32), le composant de réseau (4, 5, 6) du réseau de télécommunication (100) et/ou l'élément de multiplexage (1, 2, 3) à effectuer un procédé selon l'une quelconque des revendications 1 à 8.
